# EUROPEAN PATENT APPLICATION

(11) **EP 1 176 512 A2**
(43) Date of publication of application: **30.01.2002**
(21) Application number: 01116529.7
(22) Date of filing: 09.07.2001
(51) Int. Cl.: G06F 11/267

(54) **Test scripts**

(30) Priority: 24.07.2000 GB 0018137
(71) Applicant: MOTOROLA, INC., Schaumburg, IL 60196 (US)
(72) Inventor: Baker, Dominic Paul, Fair Oak, Hampshire SO50 7NG (GB); Jervis, Andrew Clive, Southampton, Hampshire SO40 4XD (GB); King, David Jonathan, Basingstoke, Hampshire RG21 8FP (GB)
(74) Representative: Treleven, Colin

(57) **Abstract**

A method of automatically generating test scripts from a system specification model, comprising the steps of: determining whether any events pertinent to testing are non-receive events; determining the possible orderings for the non-receive events; adding edges between the non-receive events, for each ordering; generating a test tree for each ordering; and generating test scripts.

This invention provides a method for automatically generating test scripts from a system specification model, thus providing a set of tests to be carried out upon a system. The set of tests achieve optimal test coverage of the system whilst reducing the amount of time required to carry out the test. The invention also provides a test script produced by the above method and a system for executing the test script produced.

## Description

This invention relates to automated testing techniques. More particularly, this invention relates to the generation of tests for testing systems, apparatus, etc. from the specifications to which those systems/apparatus are implemented.

In recent years, the time taken to test a system (cycle time) has been greatly reduced by the use of automated testing techniques. Automated testing techniques have introduced to the field of testing formal specifications languages, such as Message Sequence Charts (MSC), Abstract Syntax Notation 1 (ASN.1), Specification Description Language (SDL) and Unified Modelling Language (UML). Other additions have been in the form of simulation and model checking tools.

The next step forward in the development of testing techniques is intended to further reduce cycle time, and necessitates an increase in the use of, and the combination of, the various formal notations used within the test development process. One such method carries out the generation of test scripts, a definition of a single test to be carried out upon the system under test (SUT), from a system requirements specification, the definition of its operation, etc., which may be represented using an MSC, for example. The step of automatically generating tests is to best enable the determination of whether an implementation of a system is correct with regard to its specification. The tests are intended to establish whether the implementation of the system exhibits the behaviour dictated by its specification.

During test script generation, a model representing the system's behaviour is developed. Test scripts are produced from such a model by test generation tools as they explore all the possible paths or routes through the system model from start to finish. However, the algorithms employed in the production of test scripts differ from one another. Some commercial tools produce test scripts which test a single path only within the system model. As a consequence of this, during a test an event which is unexpected by the current path (for example if a signal is received in a path which is expected to comprise transmission signals only) may be received. In this situation the test will yield an inconclusive result, since it is not possible to determine whether or not the system under test is operating correctly.

The above approach allows a tester or supervisor to establish whether the tests or test scripts generated have covered every path/eventuality within the model, thereby determining whether full coverage (the testing of all possible behaviours of the SUT) of the SUT has been achieved. However, it results in the generation of a very large number of test scripts. The number of test scripts generated is directly related to the number of paths that exist through the system model. It is not always practical, and is always undesirable, to execute a large number of test scripts when carrying out the testing of a system. Hence, there exists a problem in obtaining adequate coverage of a system during testing, whilst minimising the time overhead involved in the testing of that system.

The present invention addresses some or all of the above disadvantages.

The present invention provides, as claimed in the appendent claims, a method of automatically generating test scripts from a system specification model, wherein an optimised set of test scripts is produced. The method may provide a set of test scripts which, when run, provide an optimised compromise between full coverage of a system under test (SUT) and the number of tests required to be executed.

The generation of test scripts may comprise: converting a system specification into a graph, performing a graph reduction on the graph, determining all possible orderings for non-receive events within the reduced graph, adding edges between non-receive events within the reduced graph, for each ordering, in order to produce a set of partial order graphs, one per possible order, generating a test tree for each partial order graph, and generating a set of test scripts from each test tree. In the case where all events within a graph (after performing graph reduction) are receive events then a test tree and test scripts associated with that tree are generated directly from the partial order graph.

The step of converting a system specification into a graph may comprise representing each event within the system specification as a vertex in the graph, and representing each direct relationship between events in the system specification as an edge linking the vertices representing those events within the graph. The step of reduction may comprise removing events not essential to the testing of the system. From the reduced graph the set of all possible topological orderings of non-receive events may be determined. For each topological order, a partial order graph may be generated by the addition of edges to the reduced graph, those edges being added between non-receive events that are consecutive in the topological order. For each generated partial order graph, a test tree may be produced in which nodes are arranged such that each path through the tree represents a possible ordering of all events in the partial order graph.

The generation of a set of test scripts from a test tree may comprise recursively splitting the tree as follows. A tree may be split at a node if the offspring events thereof have one or more receive events mixed with a non-receive event (there can be at most one non-receive event). If the tree is split, there will be yielded two trees, one with the non-receive event subtree removed, and one with all but the non-receive event subtree removed. A tree may not be split at a node if that node has only receive event offspring.

Further, in accordance with the present invention, there is provided a system which automatically generates test scripts from a system specification model, wherein an optimised set of test scripts is produced. The system may comprise means for generating test scripts from a message sequence chart (MSC) or system specification.

Additional specific advantages of the present invention will be apparent from the following description and figures, in which:
Figure 1 shows a high level representation of a design and testing procedure;
Figure 2 shows an exemplary Message Sequence Chart (MSC);
Figure 3 shows a detailed flow diagram depicting the method of the present invention;
Figure 4a shows a graph created from the MSC of Figure 2;
Figure 4b shows a reduced graph created from the graph of Figure 4a;
Figure 4c shows two partial order graphs derived from the reduced graph of Figure 4b;
Figure 5a shows a test tree for one possible ordering of non-receive events;
Figure 5b shows a test tree for another possible ordering of non-receive events.
Figure 6 shows two test scripts derived from the tree of Figure 5a; and
Figure 7 shows a system for carrying out testing utilising test scripts generated according to the present invention.

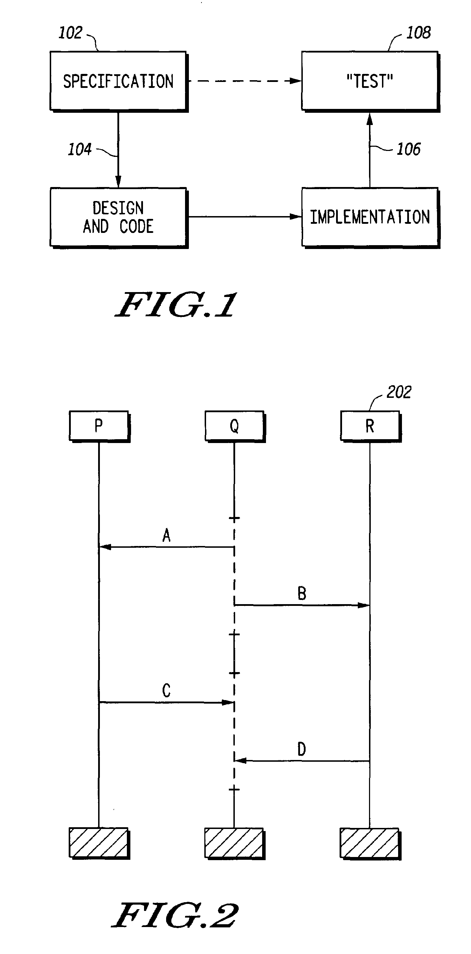

As may be seen from Figure 1, the overall procedure followed in the design and testing of a specified system/apparatus comprises a number of stages. Initially, the specification of requirements for the system to be produced must be created 102. It is this specification that dictates what the system will do and how it will operate. Once the specification is available, the system itself may be designed and/or coded 104. This step takes the new system from the stage where it is merely a list of requirements and moves it to a point where such requirements are manifested within a conceptual system. Following this, the system may be implemented 106. The implementation may take the form of a hardware device, a piece of software or a combination thereof, for example. However, the implementation of the system should operate as required by the specification to which it was created. In order to establish whether this is the case, testing 108 of the implementation, with regard to the specification, is carried out. This form of testing is generally used when a new product has been implemented in order to ensure that it is operating as desired. It may however be used for testing systems which have been in service in order to ascertain whether they are still functioning properly, i.e. as required by their specification.

Figure 2 shows an examplary MSC 202 which represents a simple system specification. As may be seen, the MSC comprises a system under test (Q). The MSC 202 details the events which occur within the entire system (P,Q,R) with respect to the SUT, and the order in which they take place. In this example, it may be seen that there are two send events A and B, and that there are also two receive events C and D. The dotted lines indicate that send events A and B could occur in any order: equally receive events C and D could occcur in any order.

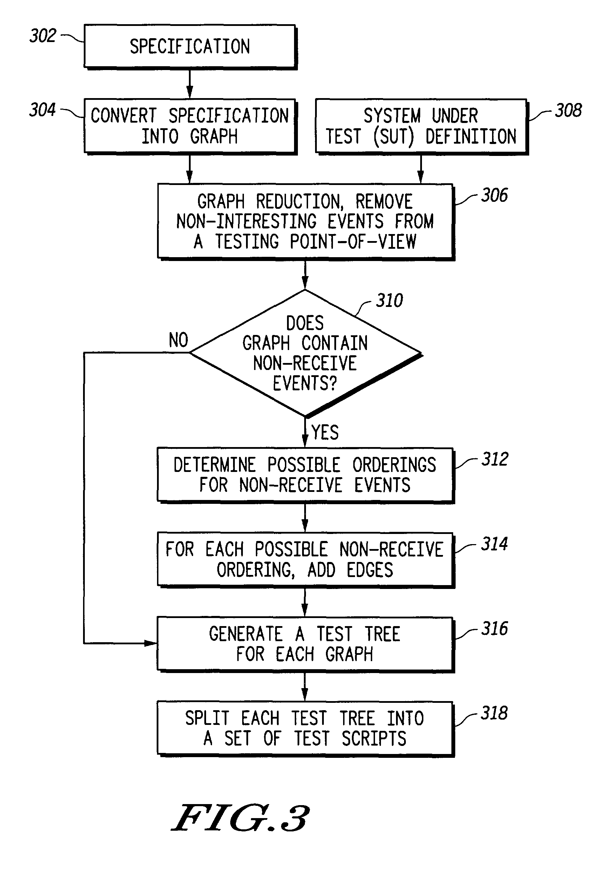

A method of generating test scripts, according to this invention, is now described, in detail, with reference to Figure 3. Function box 302 illustrates the first step, which consists of representing the specification of the system to be tested in a formal specification language. In this case, the language used is MSC as defined by International Telecommunications Union Recommendation ITU-T Z120, "Message Sequence Chart (MSC)", Geneva 2000.

At this stage it is worth setting forth a number of requirements or conditions for the generated test scripts. Firstly, the order of the events within a test script must be consistent with the order of those events given by the system specification. Secondly, messaging events that do not interface with the SUT are not required to be in a test script. A test script is only required to contain events which comprise sending signals to, or receiving signals from, the SUT. However, a test script may also contain action or timer events for internal processing. Thirdly, a test script may contain a choice between multiple receive events - the order of receive events is non-deterministic. And finally, only a single order of send events is permitted within a single test script, thus ensuring that a specific ordering of send events is tested. If, upon the running of a test script, the SUT performs as is required by the specification to which it was implemented, the test script will report a pass to the controlling system or operator.

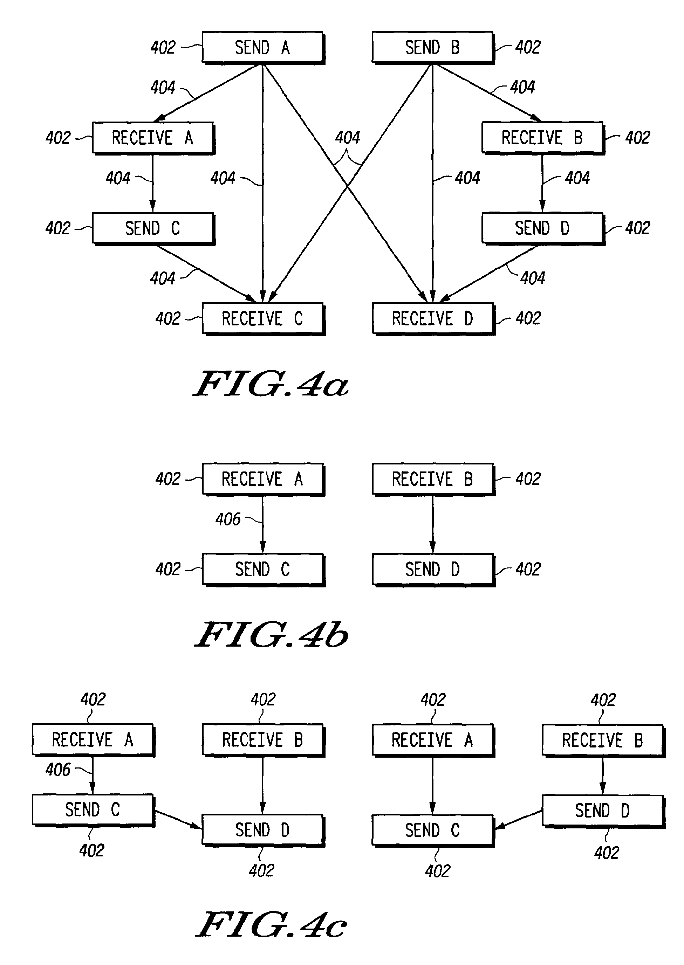

As is evident from function box 304, the specification of the system, in the form of an MSC, is converted into a graph. Each specification/MSC event is represented as a graph vertex and each direct relationship between such events is represented as a graph edge. An example of such a graph, relating to the MSC of Figure 2, is shown in Figure 4a. This Figure depicts eight graph vertices 402 and ten graph edges 404. This particular graph indicates that the sending of message A must occur prior to the receipt of messages A, C and D; the receipt of message A must occur before the sending of message C, the sending of message C must occur before the receipt of message C, the sending of message B must occur before the receipt of messages B, C, and D, the receipt of message B must occur before the sending of message D, and the sending of message D must occur before the receipt of message D. All these requirements will be clear to a skilled person from a consideration of the MSC of Figure 2.

The next step within the method of test script generation is that of graph reduction (function box 306). Graph reduction consists of the removal from the graph of events that are non-essential to the testing of the system. Reduction is performed by the removal of a vertex 402 and all edges connected to it from a graph and, subsequently, new edges being created joining those vertices preceding the removed vertex in the graph with those vertices following it. This process is carried out utilising the definition of the SUT which is supplied along with the system's specification (function box 308).

The process of graph reduction is illustrated with reference to Figure 4b, which shows a reduced version of the graph constructed in Figure 4a where system Q (Figure 2) has been treated as the SUT. Since system Q is to be treated as the SUT, vertices which relate to internal processes of system Q, such as send A, send B, receive C and receive D have been removed. It is clear from Figure 4a that the vertex 402 representing the receipt of message A must precede the vertex 402 representing the sending of message C. However, it is also evident that the vertex 402 representing the receipt of message B must precede the vertex 402 representing the sending of message D. Thus, a simplified version of the graph illustrated in Figure 4b may be created by removing the vertices 402 relating to the send events A and B, the receive events C and D, and their associated edges 404. The simplified graph is termed a reduced graph, and represents how the testing system should interact with the system under test in order to test it.

The next step is the determination (function box 310) of whether the reduced graph contains any non-receive events. If there are no non-receive events contained within the reduced graph, a test tree is generated (function box 316) directly from the reduced graph. In the present case, the reduced graph 4b contains two non-receive events (send C and send D).

Function box 312 details the step of determining all possible, or topological, orderings for non-receive events within the reduced graph. For each one of these orderings, a modified, or partial order, graph is produced, by adding edges between consecutive non-receive events in the reduced graph. The consecutive non-receive events are given by the topological order. This step is shown in Function box 314. In the present case reduced graph 4b shows that there are two non-receive events (send C and send D) which can occur in two different orders: send C then send D shown by the left hand partial order graph 4c; or send D then send C shown by the right hand partial order graph 4c.

The next step is to create a test tree from each graph (function box 316). The test tree produced in this step is rooted at a start node and the leaves of the tree represent stop nodes. All other nodes within the tree are representative of events/vertices in the partial order graph, and are arranged such that each path through the tree represents a possible ordering of all events represented in the partial order graph. Any one event that immediately follows another event is represented as an offspring thereof. If several events could immediately follow one particular event, the node representing that particular event will have several branches shooting from it.

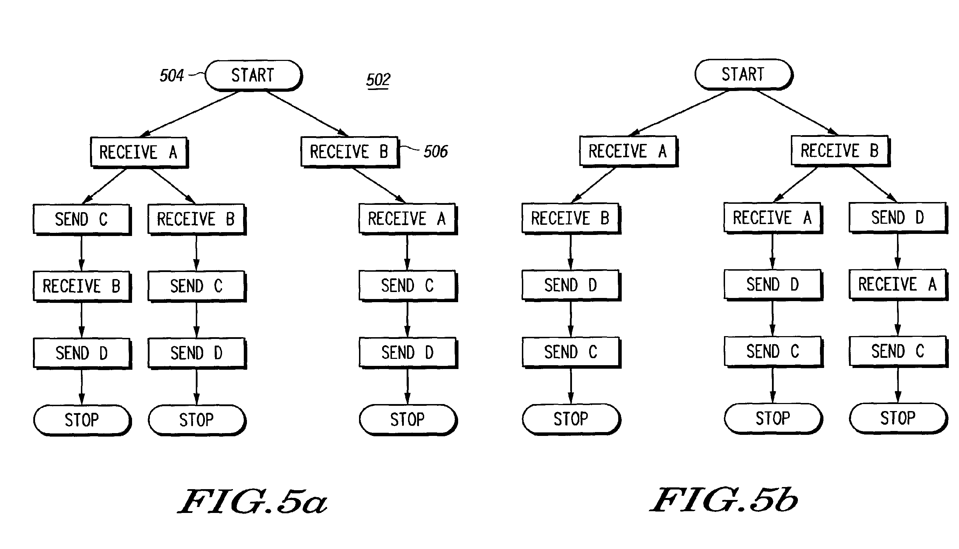

Thus, as an example the left-hand partial order graph 4c is used to generate the test tree 5a. At the start of the test tree as is clear from the MSC in Figure 2 as well as from the partial order graph 4c, event Receive A or Receive B may occur first. If Receive B occurs before Receive A the order is clear; since send D must occur after Receive B and also after send C which in turn must occur after Receive A (as indicated by the edges 406 linking the vertices) the order of events must be Receive B; Receive A; send C; send D. However, if event Receive A occurs first, either of send C or Receive B may occur next. Both send C and Receive B must occur before send D leading to the orderings shown in the left hand arm of Figure 5a.

The next stage in the creation of test scripts is the splitting of each test tree created into a set of test scripts (function box 318). In order to process the test tree into a set of test scripts, also represented as trees, the test tree is recursively split, working from leaf to root, in accordance with the types of event which form the offspring of each node within the tree. If all offspring of a particular node represent receive events, then the tree cannot be split at that node. However, if the offspring of a particular node contain a non-receive event (there can be only one, because of the ordering of non-receive events carried out in function box 312) and one or more receive events, the tree is split at that node, thereby yielding two separate trees. One of the resulting trees is formed by deleting the non-receive rooted subtree from the node, the other is formed by removing all of the receive rooted subtrees from that node. This process is carried out for each node in the tree.

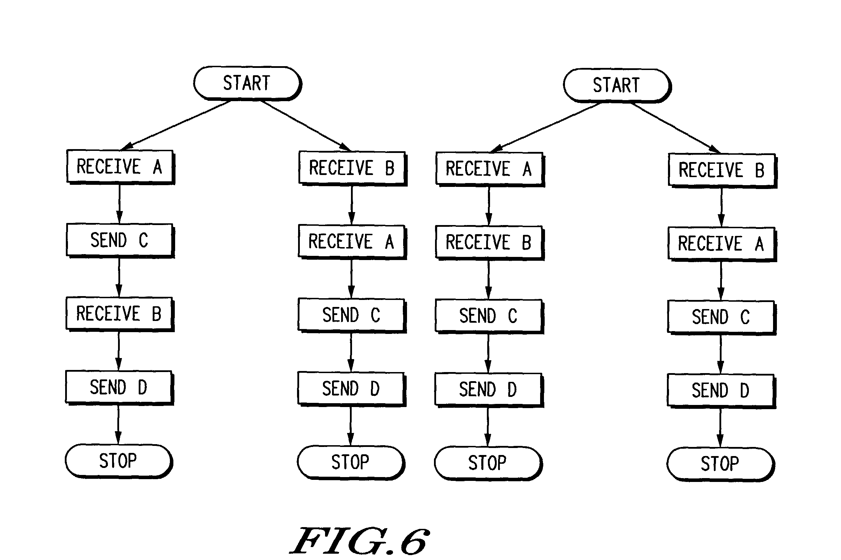

Figure 6 illustrates how the above process affects the test tree of Figure 5a, when a non-receive event ordering of the sending of message C must occur before the sending of message D has been imposed. The test tree 502 is not split at the start node 504, because the offspring thereof are both receive events. It is split at the receive B node 506 which has one each of receive and non-receive events as its offspring. Figure 5b illustrates an alternative test tree in which an order of the sending of message D must occur prior to the sending of message C has been imposed. If the process described above were applied to the test tree shown in Figure 5b two further test scripts would be produced.

Figure 7 depicts a system for testing the required implementation (the system under test (SUT)) using the test scripts generated by the above detailed method. As is seen, the system comprises a test script execution engine (TSEE) 702 that is attached in communication to the SUT 704 for the period of the testing. This enables the required communication between these two entities to take place whilst a test script is executed. There is also a bank 706 of test scripts provided. This bank provides, upon demand, test scripts to the TSEE in order that they may be executed to carry out the desired testing of the system.

The above method reduces the number of test cases produced in comparison with the number produced by a full coverage method. For the above example, if an algorithm is utilised in which one test script is produced for each possible behaviour of a system, then six test scripts are produced. Employing the above method would reduce the number of test scripts produced to four.

The method described above is advantageous because it does not produce one test script for each possible order of events that may be executed by the SUT. Instead, the process combines two or more possible SUT behaviours in an intelligent manner, thereby preserving the ordering of messages sent to the SUT and preserving the non-deterministic receipt of messages from the SUT. The combination of behaviours is such that as long as the SUT behaves according to its specification, each test will run correctly so allowing the system test to progress to its conclusion.

As an example, if a system which is to be tested is capable of exhibiting two distinct behaviours, prior art methods will produce two test scripts each of which will report a pass if one specific behaviour occurs, but an inconclusive result if the other behaviour occurs. The test script produced by the above method in this scenario would incorporate both behaviours, thus reporting a pass if either behaviour occurred.

While this invention has been described with reference to MSC and specific supporting tools, it will be appreciated that it applies equally to other formal specification languages and tools. In addition, it will be appreciated that apparatus able to carry out the above method is included within the scope of the invention.

It will be understood that this invention has been described above by way of example only, and that modifications of detail may be made within the scope of this invention.

## Claims

1. A method of automatically generating test scripts from a system specification model, comprising the steps of:
determining whether any events pertinent to testing are non-receive events;
determining the possible orderings for the non-receive events;
generating a test tree for each possible ordering of the non-receive events; and
generating test scripts.

2. A method as claimed in claim 1, wherein the step of determining whether any testing pertinent events are non-receive events, comprises:
converting a system specification model into a graph; and
performing a graph reduction on the graph.

3. A method as claimed in claim 2, wherein the step of converting a system specification into a graph comprises:
representing each event within the system specification as a vertex in the graph; and
representing each direct relationship between events in the system specification as an edge linking the vertices representative of those events within the graph.

4. A method as claimed in either of claims 2 or 3, wherein the step of reduction comprises:
removing events not essential to the testing of the system.

5. A method as claimed in any of claims 2 to 4, wherein the determination of the possible orderings of non-receive events comprises:
yielding each topological order of non-receive events in the reduced graph; and
producing a partial order graph for each topological order of non-receive events by adding edges to the reduced graph.

6. A method as claimed in claim 5, wherein a test tree, comprising all the events from a partial order graph, is generated therefrom, and wherein each path through the tree is a possible order of all those events.

7. A method as claimed in any preceding claim, wherein the test tree is recursively split at a node if the node has at least two subtrees rooted in it, and if one of the subtrees is rooted with a non-receive event.

8. A method as claimed in 7, wherein if a node has only receive event subtrees rooted in it, it may not split.

9. A method as claimed in any preceding claim, wherein a test script is generated from each test tree.

10. A method as claimed in any preceding claim, wherein any of the generated tests will report a pass if the SUT is operating normally.

11. A system utilising the method of any preceding claim.

12. A test script configured to test a system implementation with respect to its defining specification, wherein a pass is reported by the test script if one of a plurality of possibly positive results is experienced.

13. A test script as claimed in claim 12, wherein the test will report a result other than inconclusive if behaviour unexpected by the tester is experienced as long as that behaviour is one included within the specification.

14. A test script generated according to the method of any of claims 1 to 10.

15. A system for testing a system implementation with respect to its defining specification in combination with at least one test script as claimed in claim 12, comprising:
a test script execution engine in communication with the system under test (SUT).

16. A combination as claimed in claim 15, wherein the test script execution engine runs the at least one test script and monitors the yielded result.

17. A combination as claimed in either of claims 15 or 16, wherein the at least one test script is generated from the specification.
